# EUROPEAN PATENT APPLICATION

(11) **EP 1 500 843 A2**
(43) Date of publication of application: **26.01.2005**
(21) Application number: 04025900.4
(22) Date of filing: 17.08.2001
(51) Int. Cl.: F16F 9/02

(54) **Controlled-recovery pneumatic spring and apparatus including such a pneumatic spring**

(30) Priority: 29.08.2000 IT pn20000051; 17.05.2001 IT pn20010038
(62) Divisional of application: 01119880.1
(71) Applicant: Bordignon Silvano S.p.A., 36061 Bassano del Grappa (Vicenza) (IT)
(72) Inventor: Bordignon, Romeo, 36022 Cassola Vicenza (IT); Bordignon, Silvano, 36027 Rosà Vicenza (IT)
(74) Representative: Giugni, Valter

(57) **Abstract**

Pneumatic spring comprising a hollow casing having two opposite bases, in which one of these bases has an aperture, and further comprising:
- a piston sliding within said hollow casing and delimiting a first variable-volume chamber; a stem connected with an extremity thereof to a central portion of said piston; a second variable-volume chamber delimited by a variable portion of the side surface of said stem, an annular portion of the top surface pf said piston and the inner annular portion (22) of said base provided with an aperture, and provided with slow-down means adapted to automatically slow down the speed at which said piston is rejected from said hollow casing, said means including:

- a first conduit between the first chamber and the second chamber, and having a passage section with a pre-determinable flow-rate capacity, and
- a second conduit between the first chamber and the second chamber, and provided with non-return means for the passage of gas depending on the pressure difference between said chambers.

## Description

The present invention refers to a pneumatic spring, or gas spring, particularly designed for use in metal forming presses or, anyway, suitable for separating surfaces that are actuated with high contact pressure, provided with particular features that are effective in improving the performance thereof as compared with existing gas springs.

A pneumatic spring is generally known to be substantially constituted by one or more sealed chambers in which air, or some other gas, undergoes a compression when a load is applied.

Pneumatic springs are also known to be highly efficient since they have no rolling or sliding parts and there are no frictions or material strains in general.

These springs are used in many different applications, particularly in vehicle suspensions and the mechanical isolation of machinery parts.

Pneumatic springs are known to exist in the art in a variety of configurations and with a variety of features:
- the springs that are known in the art as "gas springs" are substantially constituted by an outer cylinder provided with a coaxial cavity extending throughout the interior thereof, an internal piston adapted to slide within said cavity so as to compress the gas contained therein, and a seal of an annular type, also known as O-ring in the art, adapted to tightly seal the junction between the inner surface of the cylinder and the side surface of the piston.

Anyway, for the purposes of this invention, the term "gas spring" as used here shall be understood to extend to also cover other types of devices that include both such gas springs as defined above and other means for either the transmission of forces, pressures and/or the conveyance and control of fluids to or from said gas springs, as all those skilled in the art will be fully capable of appreciating from the context of the following description.

A category of presses, particularly for sheet-metal forming applications, is commonly known to exist, which share a particular requirement: in fact, the devices and the gears that govern or are anyway involved in the movement of the press are specially designed and made so as to be able to produce the required force during the working stroke, or forward stroke, while they prove on the contrary quite delicate and scarcely suited to withstand considerable forces during the backward stroke of the moving die, when the latter has to be accompanied in a rather delicate manner and is subject to the action of appropriate gas springs.

The use of gas springs is therefore subject to some important limitations, one of which is due to the fact that, in the absence of special control arrangements, when the compressive force of the spring eventually ceases, the backward stroke of the piston thereof occurs in an immediate and often violent manner. Now, this fact proves quite often incompatible with the particular type of the gas spring.

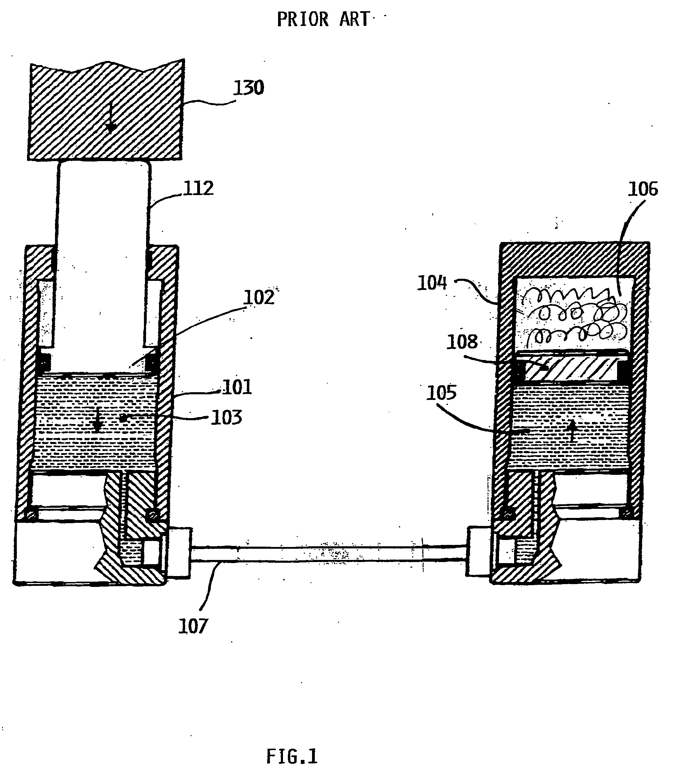

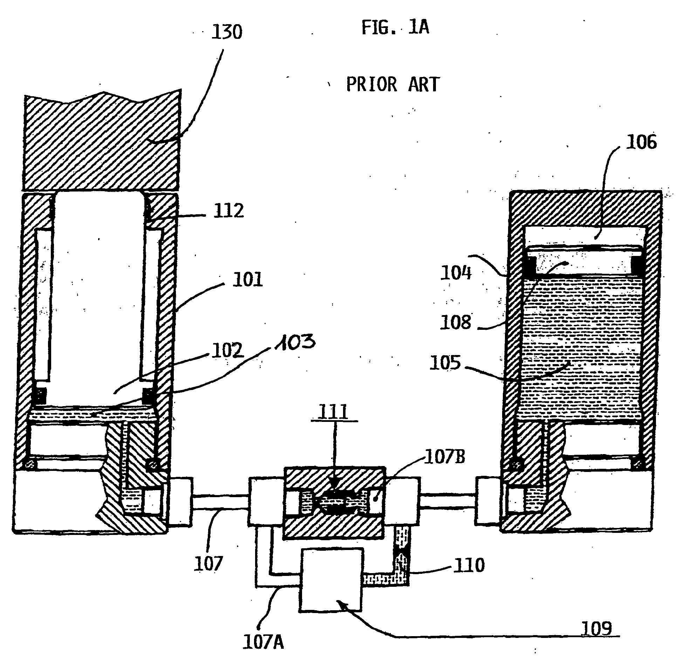

In view of doing away with such a drawback, it is a widely known practice to provide a more complex type of spring, which is also known as gas spring and is illustrated symbolically in Figure 1. This spring is constituted substantially by:
- a hydraulic cylinder 101, provided with a first piston 102 adapted to slide in a tightly sealed manner within the cavity of said cylinder 101 between two opposite extreme positions thereof, between which it defines a first variable-volume chamber 103 filled with hydraulic oil;
- an external rod 112 connected rigidly to said first piston 102;
- a gas spring, constituted by a second cylinder 104 within which there are defined two further distinct chambers, ie. a second variable-volume chamber 105, filled with hydraulic oil, and a third variable-volume chamber 106, which is tightly sealed and contains the gas whose compression generates the elastic reaction which is actually to be used to the intended purposes.

A conduit 107 is provided between the first variable-volume chamber 103 and the second variable-volume chamber 105 and connects them with each other.

Frequently, in order to avoid a direct contact between the hydraulic liquid in the second chamber 105 and the gas in the third chamber 106, a second substantially sealed separating piston 108 is provided between said fluids. However, such a piston tend to alter the ratios of the gas volume to the hydraulic liquid volume.

The above described gas spring is capable of being associated to an apparatus, such as a press or the like, that is schematically indicated at 130.

In order to exactly control the beginning of the return or recovery phase, as represented in Figure 1A, on the conduit 107 there is provided a stop valve 109, which is capable of being appropriately actuated with the use of external means (not shown), and by means of which it is possible to decide the instant at which said conduit has to be opened and, as a result, the pressure in the second cylinder 104 has to be released, and practically to enable the return or backward stroke phase of the piston 102 to be performed. In practice, with the embodiment illustrated in Figure 1, the recovery stroke of the gas spring, as shown in Figure 1A, may be suitably delayed by a definite time interval upon the end of the compression (forward stroke or delivery) phase of the same spring, and such a result is obtained by installing said stop valve in a suitable portion of said conduit 107.

However, in a number of particular applications such a delay alone is not sufficient, since after the opening of the stop valve 109 the gas is no longer held back and its pressure is capable of discharging immediately upon the oil section with the most predictable result that the piston 102 moves back quite violently into its resting position, thereby bringing about a very abrupt return movement of the rod 112, that is firmly joined to the piston 102, and therefore giving rise to a number of problems that are well-known to all those skilled in the art.

In view of doing away with such problems, it proves quite useful to bring about a certain controlled slowdown in the flow of the oil through the conduit 107, so that the pressure of the gas in the third chamber 106 is able to pass over in a controlled manner to the oil in the first chamber 103 and from here, finally, to the rod 112.

To this purpose, it is a known practice to provide said conduit 107 with a kind of choke or throttle 110 that is capable of slowing down the flow of oil towards the chamber 103. However, such a choke cannot be inserted along the same main path 107B of the delivery or compression oil, since it would of course undesirably hinder also the compression phase of the gas spring. It must therefore be inserted in a flow path running parallel to the main one and including also said stop valve 109, since said two control members of the recovery or return flow, ie. the stop valve 109 and the choke or throttle 110, must necessarily act upon the same branch of the return path of the oil.

As a result, it proves absolutely necessary for said main flow path 107B of the oil to be allowed to run parallel to the return flow path 107A in which there are contained both said stop valve 109 and said throttle 110.

It is however also necessary for the return oil to be unable to flow freely through said main flow path, since this would otherwise constitute an unintentional by-pass for the flow of the return oil, thereby nullifying the functions of both the throttle 110 and the stop valve 109. To this purpose, said main flow path 107B is therefore provided with an appropriate automatic non-return or check valve 111 that ensures the uncurbed passage of the delivery oil flow from the first chamber 103 to the second chamber 105. In this manner, as illustrated schematically in Figure 1A, an arrangement for controlling the separate flows of the oil in the delivery and return phases has practically been created, which is capable of fully complying with the functional requirements set by the particular applications.

It has however been found experimentally that such a solution, although quite effective, has a drawback in that the choke 110 actually causes the return oil to undergo a progressive and, ultimately, significant heating. Now, such a heating cannot be such as to cause the oil to reach temperatures in excess of certain highest allowable values in view of both ensuring the correct preservation of the characteristics of the oil and preventing it from undergoing thermal expansion, since this would lead to a progressive derangement in the cycle start and end positions of the rod.

Therefore, in order to prevent the oil from reaching excessively high temperature values, the most immediate and sure solution consists in reducing the operating rate of such types of gas springs. However, such a measure would of course affect and heavily limit the economic and productive efficiency of the whole manufacturing cycle in which gas springs of the above described kind are being used.

From the disclosure in US 4,742,997 and US 4,838,527 the solution is furthermore known which consists in providing a plurality of mixed oil/gas springs connected via dedicated lines to a source of gas under pressure. Such an arrangement enables the gas inflow into the springs to be regulated and, as a result, the operation of these springs to be controlled in a synchronous manner; in particular, it enables the moment to be delayed at which the return or recovery stroke of the same springs starts. However, this solution implies the use of quite complicated and expensive control and actuation devices, as well as the availability of an external, dedicated source of pressurized gas.

From the disclosure in US 5,076,404 a solution is also known which involves a so-called gas spring that is however filled with a mixture of gas and oil. According to said patent specification, to such a mixed gas/oil spring there is associated a fixed volume that acts as a pressure reservoir into which the gas is driven and compressed during the compression phase of the spring, and which delivers the compressed gas again to the same spring when the compression action is concluded and the spring must therefore recover its initial resting condition.

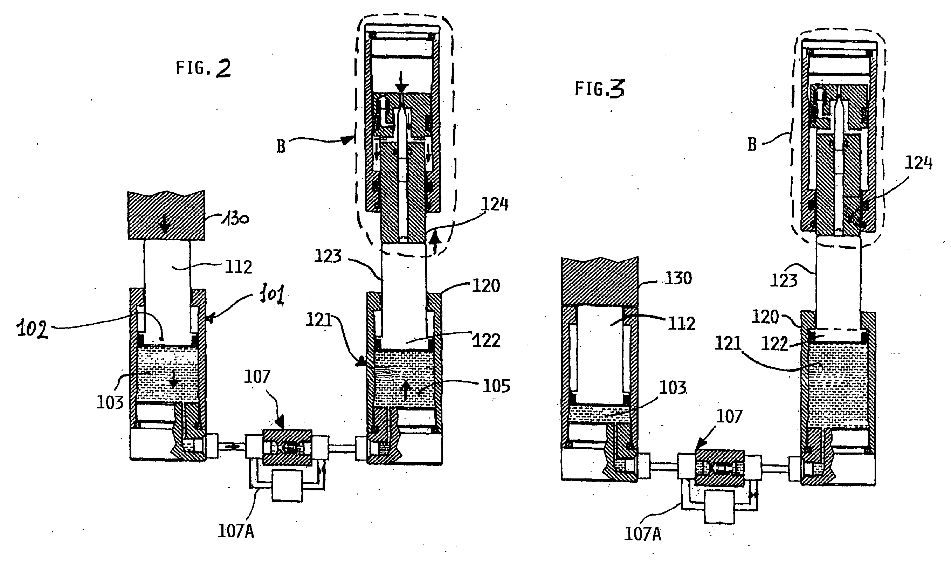

However, even this solution has practically a number of drawbacks that may be summarized as follows:
- the first drawback lies in the fact that the gas return phase is controlled by a special regulation device (12) that is synchronized with the motion of the spring or the whole plant; it can of course be clearly appreciated that the presence of such a device alone generates a both direct and indirect cost, owing also to its requiring to be synchronized;
- the second drawback is due to the presence of said fixed volume itself, as well as to the presence of the connections associated therewith; even such a presence is in fact the origin of additional costs and complications; this drawback is only reduced, but not eliminated by the embodiment illustrated in Figure 2 of the above cited patent specification, in which said fixed volume, used as a pressure reservoir, is provided in the form of a cylindrical ring that wraps up entirely the working spring, since it is anyway still necessary for an additional device and related volume to be provided;
- a third drawback depends on the fact that, as all those skilled in the art are well aware of, when the oil/gas mixture flows back to the valve through the needle valve 14 acting as a choke, the oil tends to overheat to a quite considerable extent, thereby implying a full cascade of further problems that are largely known in the art and shall therefore not be dealt with any longer here.

Anyway, it appears quite interesting to notice, in the above cited patent publication, that the recovery or return speed of the spring is not free, but depends rather on the presence and regulation of said needle valve, and such a circumstance turns actually out to be useful in all those cases in which the return or recovery stroke must be in some way regulated and slowed down in order to prevent the piston, which is free and clear from any restraint at this point, from being kind of "shot" back into its resting position.

Some solutions are also known from US 5,588,641 which make use of a gas spring and are aimed at solving the problem of the regulation and control of the return or recovery stroke of the spring. However, the solutions set forth in said patent publication appear to be nothing more than just variants, albeit more complex, of the solution disclosed in US 5,076,404; in particular, with the latter they share the circumstance that they in any case require the presence of additional volumes along with a dedicated control device. Furthermore, in the solution described in US 5,588,641 the return speed of the piston is fixed.

It would therefore be advantageous, and it is actually a main purpose of the present invention, to provide a solution for the implementation of pneumatic or gas springs, comprising hydraulic circuits, are free from the afore mentioned drawbacks and, in particular, do not require any presence of additional volumes; furthermore, these springs shall be capable of being made using simple, readily available techniques and materials.

Within the scope of the above indicated main purpose, a further important purpose of the present invention is to provide a solution for the implementation of an arrangement associated to at least a gas spring according to the present invention, which is substantially free from the afore cited drawbacks and is capable of being made using simple, readily available techniques and materials.

These aims, along with other features of the present invention, are reached in a gas spring made and operating as recited in the appended claims.

Features and advantages of the present invention can anyway be more readily and clearly understood from the description of some preferred embodiments that is given in detail and illustrated below by way of nonlimiting example with reference to the accompanying drawings, in which:
- Figures 1 and 1A are views of a prior-art embodiment, as described and indicated earlier in this description;
- Figure 2 is a cross-sectional view passing through the axis of a simplified embodiment of a gas spring according to the present invention:
- Figures 2 through to 5 are views of the median section along the axis of symmetry of a device associated to a gas spring according to the present invention, in four operating phases thereof, respectively;

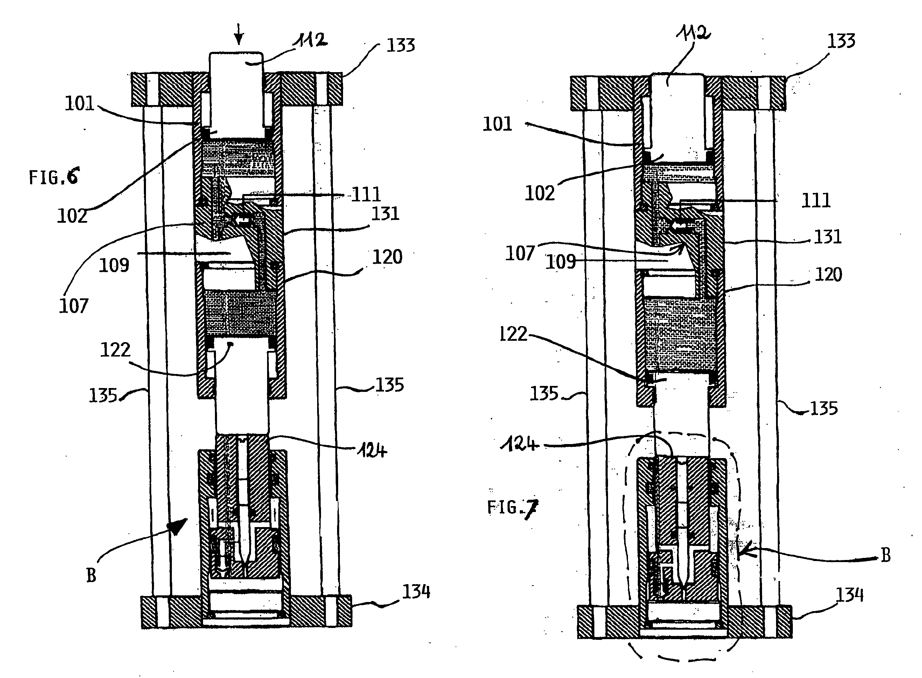

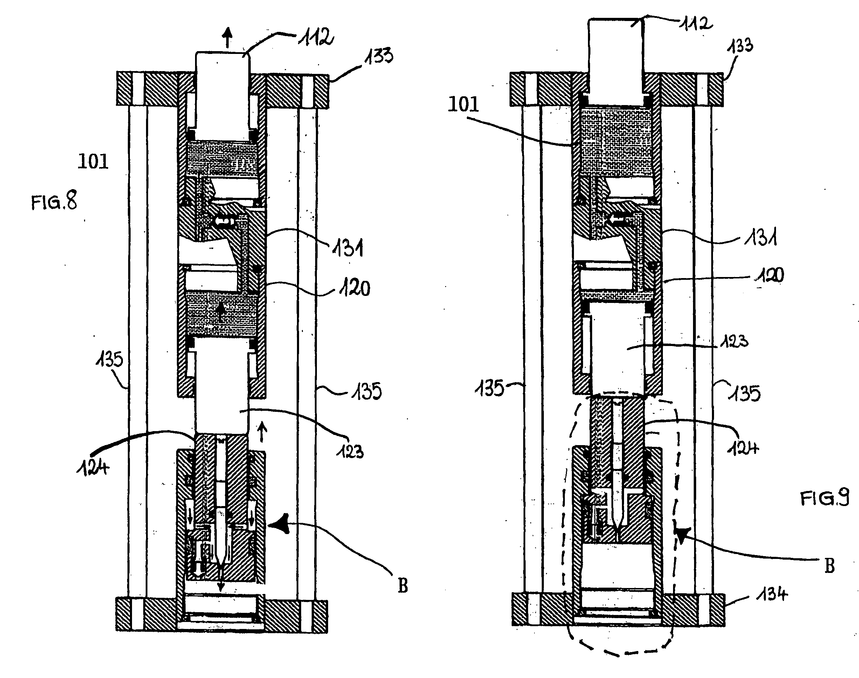

- Figures 6 through to 9 are views of the median section along the axis of symmetry of an alternative embodiment of a device associated to a gas spring according to the present invention, in four operating phases thereof, respectively.

A gas spring according to the present invention can be advantageously applied to the prior-art embodiment illustrated in Figures 1 and 1A in the way and mode as described below. The advantage that derives from such an application lies in the fact that it becomes unnecessary for the flow of oil to be braked, ie. slowed down in the return conduit 107A, while the second piston 108 is driven, during the return or backward stroke thereof, ie. during the phase in which the volume of the second chamber 105 is reduced, with a controllable and controlled pressure and, above all, with a braked or slowed-down course, in such a manner as to ensure that the re-ascending speed of said first piston 102 is also correspondingly controllable and therefore, in particular, suitably slowed down.

Such a result is attained, according to a preferred embodiment of the present invention, with a gas spring as illustrated in the Figures 2 to 5. In these Figures the piston and the container on the left side of the Figures, as well as the central conduit 107, 107A and 107B, are exactly identical to the corresponding component parts in Figure 1; the device on the right side of the Figures on the contrary comprises:
- a container 120,
- a tightly sealed variable-volume chamber 121 filled with hydraulic fluid and connected via the conduit 107 to said first chamber 103,
- a sliding piston 122 delimiting a side of said chamber 121,
- a stem 123 firmly joined to said piston 122 and extending outside of said container 120 with a plane surface that is orthogonal to the axis of both the piston and the same stem, and orthogonal also to the direction of movement of the piston/ stem assembly 122, 123.

Let us now consider, in Figure 2 to 5, the device contained within the closed-loop dashed line generally indicated at B, and Known in the prior art, see DE 4103948 and EP 1074759.

In fact, since a basic feature of the present invention lies in the possibility for the piston 122 to be slowed down in a controlled manner during the return stroke thereof, it has been assumed that such a functionality may be brought about in a still better way by coupling the stem 123 to the stem 124 belonging to the gas spring indicated at B.

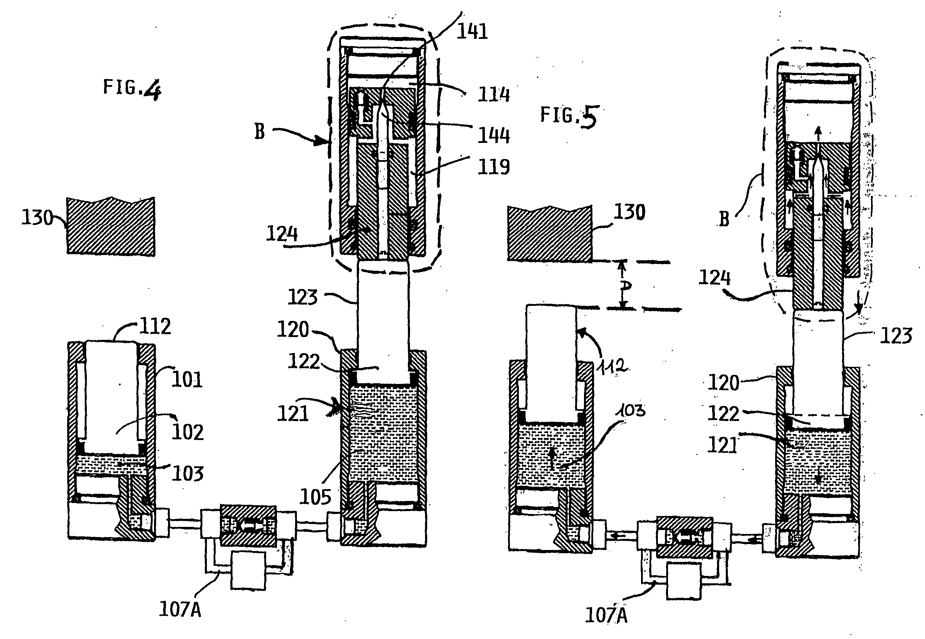

With reference again to Figures 2 to 5, these can be noticed to respectively represent the four phases in which: the stem 112 lies: at an intermediate point along the downward stroke as pushed by the press 130 (Figure 2); at the bottom dead centre (Figure 3); with the press that has moved back into its initial position, whereas the gas spring is still filly compressed (Figure 4); and finally with the gas spring that has reached an intermediate point along its recovery or return stroke (Figure 5).

In good substance, the core of the present invention is based on the fact that a choke provision in the flow path of the oil has been replaced by a choke provision in the flow path of the gas in a braked, ie. slowed-down gas spring associated, by means of the piston 122 and the stem 123, to the stem 124 of said braked gas spring indicated at B.

In the prior-art solution illustrated in Figure 1, the pressure in the chamber 105 starts decreasing owing to the effect of the gradual increase of the occupied volume following a trend in accordance with the ideal gas law.

With a device according to the present invention, on the contrary, at the beginning of the return phase illustrated in Figure 4 the pressure in the chamber 105 starts decreasing following a sensibly different trend ; namely, at the beginning of said phase, there occurs a simultaneous pressure fall that is ascribable to the fact that the volume containing the gas in the device indicated at B is practically the sum of the volumes in the chamber 114 and the chamber 119, and that the trend followed by the pressures within said volumes does not behave in accordance with the usual gas laws in a single volume owing to the effect of the choke or narrowing 141 brought about by the conical point 144.

After such an abrupt fall, the pressure foes on decreasing, however following a much more gradual trend, at almost constant, very low values, due exactly to the fact that the passage of the gas from the chamber 114 to the chamber 119 is slowed down owing to its being choked at 141, so that, ultimately, the pressure of the gas in the chamber 114 sensibly corresponds to the volume thereof, taking also the action of hydraulic frictions and the movement of the hydraulic pistons into due account.

It can be readily appreciated at this at this point that the possibility for the return stroke of the stem 123 to be actuated by means of the controllably slowed-down return of the stem 124 of the device indicated at B makes the choke provision 110 illustrated in Figure 1 in the flow path of the oil in the conduit 107A unnecessary; as a result, such a choke 110 is removed from said conduit and, with it, also the whole set of drawbacks connected therewith or induced thereby, such as in particular the overheating of the oil and the constraint of a reduced operating rate, are eliminated.

With reference to Figure 5, it can in fact be noticed that, after the re-ascent phase of the press 130, but before the gas spring has actually completed its return stroke, the spring itself can not only be delayed, but also slowed down in such a manner as to cause the surface of the stem 112 to be spaced from said press 130 by a controllable distance D and, ultimately, said press is by no way stressed or forced during the re-ascending phase thereof; furthermore, upon the press having so moved back into its resting position the stem 112 moves again into contact therewith in a gradual, controllable manner, as this is actually the ultimate purpose of the present invention.

An advantageous improvement of the present invention is further obtained in the following manner: with reference to the prior-art solution illustrated in Figure 1, the emphasis is put again on the fact that, according to the present invention, the oil flow braking action is no longer brought about by the choke provision 110, which is in fact eliminated; without such a choke provision, also the reason behind the need of the two conduits 107A and 107B in a parallel arrangement with respect to each other falls practically off, so that they may be unified again into the main conduit 107.

Therefore, in said main conduit there would be to be found, in series with respect to each other, both the stop valve 109 and the non-return valve 111: it can be readily appreciated that the non-return valve 111 becomes superfluous in this situation since, under certain particular conditions and in definite applications, its function may of course be taken over and performed by the stop valve 109 itself.

It is therefore both possible and advantageous, in certain kinds of applications, for not only said two conduits 107A and 107 B arranged in parallel with each other, but also the non-return valve 111 arranged between the first variable-volume chamber 103 and the remaining part of the device to be eliminated.

It has however been found experimentally that the physical configuration represented in Figures 2 through to 5 may prove inadequate in certain types of installations in which it is not possible or expedient for the various containers and pistons to be physically separated from each other, or in which it might prove expedient, from a construction point of view, for the various component parts to be brought together into a single block.

Therefore, with particular reference to Figures 6 through to 9, an advantageous configuration is illustrated in this connection of the construction of a delayed and slowed-down gas spring according to the present invention, in four operating phases thereof corresponding to the phases illustrated in the respective Figures 2 to 5, in which the cylinders of the chambers and the pistons are coaxial; in particular the cylinders or containers 120 and 101 are easily joined together or even arranged in one or two external enclosures containing the respective pistons 122 and 102, in which the conduit 107 and the related stop and non-return valves 109 and 111 would be housed inside said containers or inside an additional structure 131 that joins them to each other in a firm, permanent manner.

In particular, it has been found experimentally that an optimum solution from a compactness , solidity and also maintainability point of view is the one illustrated by way of example in Figures 6 through to 9, in which the container 120 comprises also the body of the of the previusly identified cylinder 101, on an outer edge of which there is fixed an appropriate attachment plate 133; symmetrically, on the opposite edge of the slowed-down gas spring indicated at B, there is fixed a corresponding attachment plate 134 and, as a result, these plates 133, 134 are capable of being easily tied with each other by means of appropriate stay rods or bolts 135; such a solution, among other things, allows for an easy assembly of the various component parts, with favourable consequences as far as possible setting, repair or replacement needs or even the interchangeability of the individual component parts or groups of devices are concerned. It may in fact be readily appreciated that an individual device indicated at B can be easily coupled to several pairs of containers 101, 120 joined with each other, while one and any of said pairs of containers, along with the related additional structure 131, may in turn be coupled, of course in a selective manner, to a plurality of gas spring as indicated at B having differentiated characteristics with respect to each other.

## Claims

1. Apparatus including a pneumatic spring and formed by:
- a first container (101) within which there is able to slide in a fluid-tight manner a piston (102) provided with an appropriate external actuation stem and adapted to move in a continuous way between a first all-out, ie. rearmost position, at which it concludes its backward or return stroke, and a second all-in, ie. full-insertion position, at which it concludes its forward or compression stroke, in which a first variable-volume chamber (103) filled with hydraulic fluid is defined by the stroke of said piston moving between said two opposite positions,
- a second container (120) within which there is able to slide in a fluid-tight manner a second piston (122) adapted to move in a continuous way between two distinct positions defining a second variable-volume chamber (105) filled with a hydraulic fluid, in which there are provided means adapted to act upon said second piston by means of an elastic reaction, which is preferably delivered by an appropriately compressed gas,
- a conduit (107) connecting hydraulically said first variable-volume chamber (103) with said second variable-volume chamber (105) of said second container (120),
**characterized in that** said elastic reaction produced by said means upon said second piston is a controllably slowed-down reaction, and that said means adapted to act upon said second piston are actuated by a pneumatic spring according to one or more of the preceding claims 1 to 10.

2. Apparatus according to claim 1, **characterized in that** in correspondence of two parallel branches of said conduit (107) there are provided a non-return valve (111) and a selectively actuatable stop valve (109), and that said stop valve is not arranged in series with any device adapted to slow down the flow of hydraulic fluid passing through said stop valve.

3. Apparatus according to claim 2, **characterized in that** in said conduit (107) there is solely provided a selectively actuatable stop valve, and that no non-return valve is arranged in parallel with said stop valve.

4. Apparatus according to one or more of the preceding claims, **characterized in that** said first and said second container (101, 121) and said casing are firmly joined to each other and are made as a single cylindrical structure, which also comprises an additional connecting structure (131) that houses said non-return and stop valves, along with the respective conduits.

5. Apparatus according to claim 4, **characterized in that** the moving pistons comprised therein are coaxial, and that there are provided means adapted to firmly join said two containers and said casing to each other.

6. Apparatus according to claim 5, **characterized in that** said means comprise at least two separate plates (133, 134) that are respectively linked with the opposite extremities of said cylindrical structure, and that there is provided a plurality of stay bolts (135) adapted to connect said two plates (133, 134) with each other and firmly join them together.
